# EUROPEAN PATENT APPLICATION

(11) **EP 4 817 841 A1**
(43) Date of publication of application: **07.10.2026**
(21) Application number: 26169568.8
(22) Date of filing: 31.03.2026
(51) Int. Cl.: B29C 44/02, B29C 44/06, B29D 35/12, A43B 13/18, B29C 71/00, B29K 21/00, B29K 75/00, B29K 101/12, B29L 9/00, B29L 31/50

(54) **METHOD FOR MAKING AND FINISHING AN ARTICLE IN THERMOPLASTIC FOAM AND PRODUCT OBTAINED THEREWITH**

(30) Priority: 31.03.2025 IT 202500006717
(71) Applicant: Vamas Spa, 56024 San Miniato (PI) (IT)
(72) Inventor: VAGNOLI, Ivano, 56024 SAN MINIATO (PI) (IT); VAGNOLI, Andrea, 56024 SAN MINIATO (PI) (IT); VAGNOLI, Valentina, 56024 SAN MINIATO (PI) (IT)
(74) Representative: Rocchetto, Elena

(57) **Abstract**

The invention is a method for making and finishing articles in thermoplastic foam, comprising the following steps: moulding of an article by means of the known SCF technology, extraction of the article from the mould and finishing through the application of at least one coating on the entirety or part of the surface of said article, wherein said coating is obtained from a polyurethane-based, epoxy-based or acrylic-based product, and more preferably a polyurethane-based product.

## Description

The present patent concerns products made from thermoplastic foam and, more specifically, it concerns a new method for manufacturing and finishing an article made from thermoplastic foam, as well as the article obtained therewith.

The present invention is particularly, but not exclusively, suited to be applied to the manufacture of outer soles, midsoles or insoles for footwear.

Products made from thermosetting foams, such as PU or cross-linked EVA foam, are known.

These materials, which are characterized by their elasticity and flexibility, are commonly used to manufacture a wide variety of products across several sectors.

For example, it is known that thermosetting foam materials are used to produce padding, components and general merchandise.

These materials are also particularly suited to be used for manufacturing shoe soles and midsoles thanks to their elasticity and wear resistance. For example, shoes are known, which are provided with a sole or midsole made of cross-linked EVA foam or polyurethane foam.

However, these materials are quite heavy, especially when thick soles are needed, and they are not easily recyclable.

There are also thermoplastic foams produced with the technology known as SCF or SCFF (Supercritical Fluid Foam), which are used to produce articles with very low density, even lower than that of PU or cross-linked EVA foam. Furthermore, as expansion takes place in the mould following the injection of a supercritical fluid - typically nitrogen or carbon dioxide - into the molten material, the finished product remains stable once removed from the mould; this makes it possible to produce articles with greater precision and without the addition of cross-linking or expanding agents, so that the obtained material is completely recyclable.

Said foam materials produced through SCF technology have high elasticity, higher than that of comparable foam materials produced using conventional technologies. This makes them particularly suitable for the manufacture of a wide range of products; more specifically, they can be particularly suitable for the production of shoe soles, as they make the sole elastic and light.

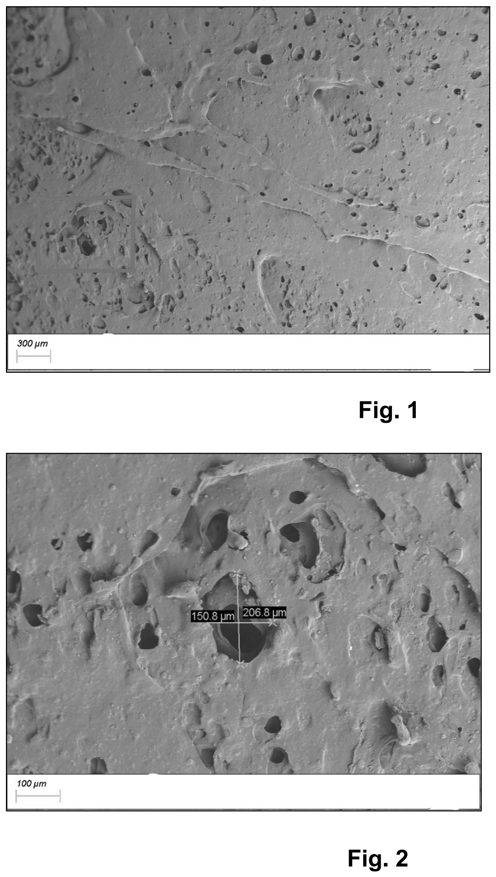

Foam materials produced with SCF technology are characterized by a certain degree of porosity. For example, as shown in Figure 1 below and in the detail in Figure 2, the surface of a thermoplastic foam product manufactured with SCF technology is characterized by widespread porosity, with the largest pores having characteristic dimensions in the order of 200 µm.

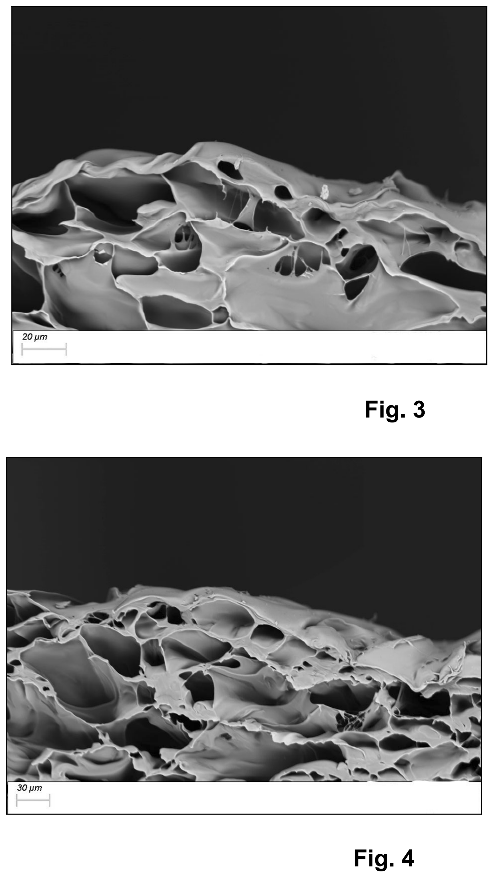

This porosity is also visible in Figures 3 and 4, which show two cross-sections of an article where internal porosity as well as surface porosity and roughness can be seen, all in the order of a few tens of microns.

The size of the pores and surface irregularities is such that dust, water and dirt can still penetrate, but they are not large enough to allow the surface to be cleaned using standard washing methods.

As a consequence of the above, while this technology gives materials mechanical properties that make them highly suitable for a wide range of applications, it cannot be conveniently used for producing articles having a significant aesthetic value.

For example, in the case of footwear, soles made from thermoplastic foams containing SCF become dirty very easily and quickly, irreversibly damaging the appearance of the footwear.

The same issue arises for all products manufactured with this technology.

Furthermore, due to the surface porosity and the size of the pores, it is not possible to effectively clean their surface, which consequently remains dirty. Another aesthetic issue with products manufactured using SCF technology lies in that, during the setting stage, the surface of the article takes on a "marble-like" appearance due to the quick expansion of the material. This aspect is not always appreciated, especially when the product is visible while in use, as is the case with shoe soles, for example.

Furthermore, the thermoplastic foams obtained through SCF technology have lower surface wear resistance than the thermosetting foams obtained through other established foaming technologies.

In addition to the above, the porous structure of the material results in greater wettability of the same, which, over time and for certain materials, can deteriorate the characteristics of the product due to the phenomenon of hydrolysis.

Therefore, these drawbacks limit the potential applications of SCF technology to specific types of products.

In order to overcome the drawbacks mentioned above and extend the field of application of this technology (through SCF), a new method for making and finishing articles in thermoplastic foam has been developed.

The present patent also concerns articles made using said method.

The present patent also relates to outer soles, midsoles and insoles for footwear manufactured using the above-mentioned method.

The main object of the present invention is to produce articles made of thermoplastic foam using SCF technology, thereby overcoming the above-mentioned drawbacks.

The method is also particularly suitable for manufacturing items having an aesthetic value, as it also solves the issues relating to the surface appearance of the product. The method actually slows down the rate at which the surface of the product becomes dirty, makes the latter easier to clean at a later moment, and makes the surface more resistant to wear and tear.

The method also increases the resistance of the product to hydrolysis.

Another object of the present method is to provide a product that can be effectively coloured using dyes, for example and preferably water-based dyes. This makes it possible to use a base material of a neutral colour to make the article and to effectively dye it during the finishing step. Consequently, it will not be necessary to use pre-dyed base materials, thus reducing costs and the amount of stock in the warehouse.

In a specific application, the method also allows the product to be dyed right through to the core.

The combination of a dyeing stage followed by a coating stage thus makes it possible to obtain a coloured product with sealed surface pores.

The new method for manufacturing an article made of thermoplastic foam comprises the following steps:
- preparation of a mould configured to make a specific article;
- introduction of the thermoplastic material to be expanded in said mould;
- expansion of the thermoplastic material through the use of a supercritical fluid according to the known SCF technology;
- extraction of the article from the mould;
- finishing;

and wherein said finishing step includes:
   - an initial stage of dyeing said article, preferably using water-based dyes,
      and/or
   - a second coating stage intended to seal the surface pores of the article through the application of a coating to the entirety or part of the surface of said article;
and wherein said coating is obtained using a polyurethane-, epoxy- or acrylic-based product, and more preferably a polyurethane-based product.

Said coating product can be applied by spraying and/or immersion or by means of a brush.

In the preferred solution, it has been found that said coating product can be best applied by spraying.

Said finishing stage may include the application of two or more coating layers, even with products of different types.

The application of the coating makes the treated surface more resistant to wear and hydrolysis, and also makes the surface finish more uniform, eliminating the marble-like effect caused by the expansion and moulding process.

The coating can, in fact, be transparent and/or opaque, or glossy and/or coloured.

Finally, the most significant aspect lies in that the coating product used is particularly suitable for sealing the surface pores of the article, thereby preventing the introduction of dust, liquids and dirt, reducing the rate at which the article becomes soiled and making it easier to clean its surface should this be required.

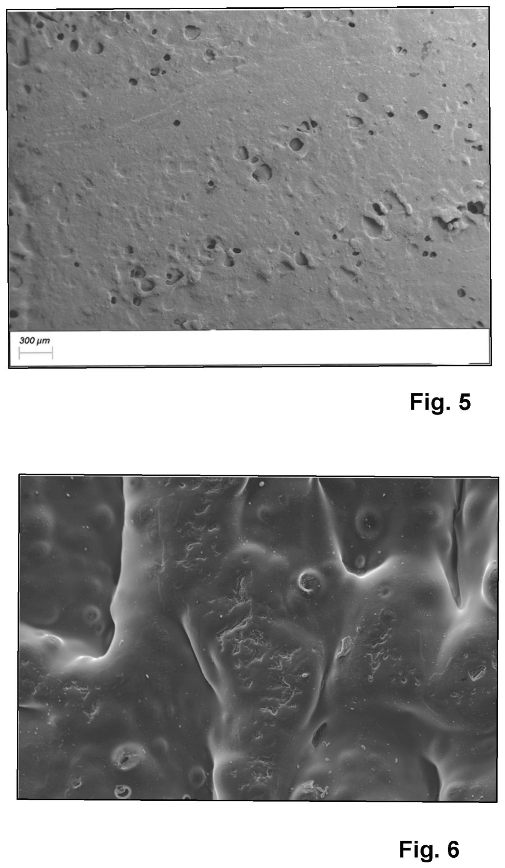

Figure 5 shows an enlarged view of the surface of an article produced with the new method, in which the porosity is visibly reduced and the surface is therefore uniform, while Figure 6 shows a further enlarged detail where the coating layer applied is visible.

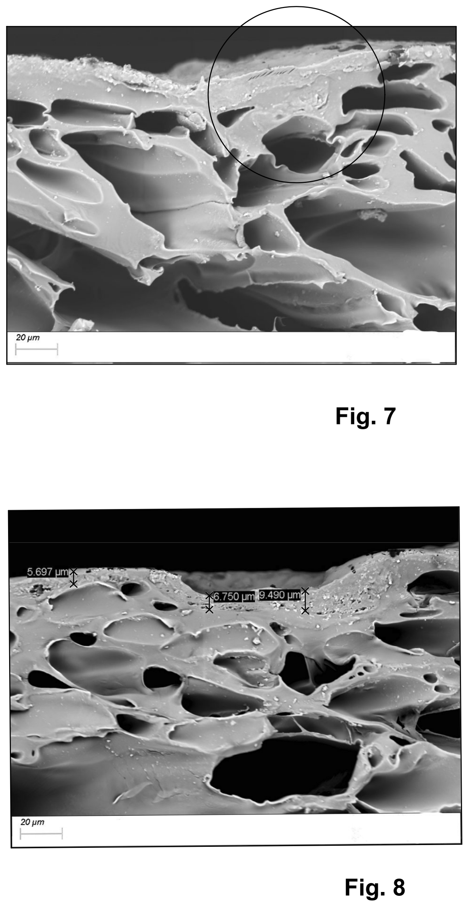

Figure 7 shows a cross-section view in which, inside the circle, it is possible to see a pore that has been completely sealed by the layer of paint.

Figure 8 shows a cross-section view in which the paint layer is visible. In the example shown in this figure, the thickness of the paint layer is less than 10 µm.

In the preferred embodiment, the thickness of the coating layer is included between 1 and 100 µm, more preferably between 1 and 50 µm, and even more preferably between 1 and 20 µm.

It has in fact been found that, given the average size of the pores, these thickness ranges are sufficient to achieve the desired technical effect, while at the same time optimizing paint consumption and reducing the time required for manufacturing and finishing the article.

However, it is possible to apply even thicker coating layers, for example up to 2000 µm.

The subject of the present patent includes a new article in thermoplastic foam made using SCF technology in accordance with the above-mentioned method, comprising a surface coating applied to the entirety or part of its surface, wherein said coating is obtained from a polyurethane-, epoxy- or acrylic-based product, and more preferably a polyurethane-based product.

The subject of the present patent includes an outer sole, midsole or insole for footwear in thermoplastic foam made using SCF technology in accordance with the above-mentioned method, comprising a surface coating applied to the entirety or part of its surface, wherein said coating is obtained from a polyurethane-, epoxy- or acrylic-based product, and more preferably a polyurethane-based product.

Said thermoplastic material from which said article - specifically, said sole for footwear - is made is preferably a thermoplastic elastomer and, more preferably, TPU, PEBA or thermoplastic EVA, expanded using SCF technology.

In defining the thermoplastic elastomers used in the invention, the definitions and criteria set out in ISO 18064 have been taken into account.

With regard to the dyeing stage, this can be conveniently carried out either before the coating stage or as an alternative to the latter.

In the first case, once the article has been removed from the mould, it is dyed using preferably water-based dyes, which have the advantage of being environmentally friendly.

In both cases, said dyeing process can be performed by immersing the article in said dye and then drying it before proceeding to the coating stage, if included.

The dyeing process can be carried out on articles of a neutral colour or on articles that are already coloured.

According to a possible solution, said dyeing process can be carried out by immersing the article in a tank containing the dye, which is then placed under vacuum. Thanks to this technique, the air trapped in the surface pores or in the pores connected to the surface is extracted. Once the tank has returned to ambient pressure, the dye can penetrate the pores, which results in deep dyeing.

For this reason, the initial article can be already coloured or, more advantageously, can be of a neutral colour, having been made from a non-coloured base material, with the advantages already mentioned.

The resulting product is coloured and can be used directly in the manufacture of the outer sole, midsole or insole. Alternatively, depending on the final characteristics of the product to be obtained, the coloured article may be sent on to the subsequent coating stage described above.

Therefore, with reference to the above description and the attached drawings, the following claims are made.

## Claims

1. Method for making and finishing articles in thermoplastic foam, **characterized in that** it comprises the following steps:
- preparation of a mould configured to make a specific article;
- introduction of the thermoplastic material to be expanded in said mould;
- expansion of the thermoplastic material through the use of a supercritical fluid according to the known SCF technology;
- extraction of the resulting article from said mould;
- finishing;
and wherein said finishing step comprises the following stages:
- a first stage of dyeing said article, preferably using water-based dyes,
and/or
- a second coating stage intended to seal the surface pores of the article through the application of a coating to the entirety or part of the surface of said article;
and wherein said coating is obtained using a polyurethane-, epoxy- or acrylic-based product, and more preferably a polyurethane-based product.

2. Method according to claim 1, **characterized in that** said coating is applied through a spraying process and/or an immersion process and/or by means of a brush.

3. Method according to claim 1, **characterized in that** said coating stage comprises two or more successive applications of said coating, with a single product or two or more different products.

4. Method according to claim 1, **characterized in that** said coating is transparent and/or coloured.

5. Method according to claim 1, **characterized in that** said coating is opaque and/or glossy.

6. Method according to claim 1, **characterized in that** the thickness of said coating is included between 1 and 2000 µm, more preferably between 1 and 50 µm and even more preferably between 1 and 20 µm.

7. Method according to claim 1, **characterized in that** said thermoplastic material is a thermoplastic elastomer and more preferably is PEBA expanded with SCF technology, or is TPU expanded with SCF technology or is thermoplastic EVA expanded with SCF technology.

8. Method according to claim 1, **characterized in that** it comprises said dyeing stage before said coating stage.

9. Method according to claim 1, **characterized in that** said dyeing stage is carried out by immersing said article in a tank containing a dye, preferably a water-based dye.

10. Method according to claim 9, **characterized in that** said dyeing stage comprises the following steps:
- immersing said article in a tank containing a dye, preferably a water-based dye;
- sealing said tank and creating vacuum inside it, in order to extract from the article the air contained in the surface pores or in the pores communicating with the surface;
- opening the tank to allow the internal pressure to return to ambient pressure, thereby causing the dye to flow into the pores.

11. Method according to claim 1, **characterized in that** said thermoplastic material used to make the article is of a neutral colour.

12. Article made of thermoplastic foam and manufactured using the method according to one or more of the preceding claims, **characterized in that** it comprises a body made of thermoplastic foam obtained through SCF technology and at least one surface coating applied to the entirety or part of its surface, wherein said coating comprises a polyurethane-, epoxy- or acrylic-based product, and more preferably a polyurethane-based product.

13. Outer sole, midsole or insole for footwear made of thermoplastic foam and manufactured using the method according to one or more of the preceding claims, **characterized in that** it comprises a body made of thermoplastic foam obtained through SCF technology and at least one surface coating applied to the entirety or part of its surface, wherein said coating comprises a polyurethane-, epoxy- or acrylic-based product, and more preferably a polyurethane-based product.

14. Outer sole, midsole or insole for footwear according to claim 9, **characterized in that** said thermoplastic foam is a thermoplastic elastomer and more preferably is PEBA expanded with SCF technology, or is TPU expanded with SCF technology or is thermoplastic EVA expanded with SCF technology.
